# EUROPEAN PATENT APPLICATION

(11) **EP 2 522 634 A1**
(43) Date of publication of application: **14.11.2012**
(21) Application number: 11759246.9
(22) Date of filing: 14.03.2011
(51) Int. Cl.: C02F 3/28

(54) **ANAEROBIC TREATMENT APPARATUS AND ANAEROBIC TREATMENT METHOD**

(30) Priority: 25.03.2010 JP 2010070343
(71) Applicant: Kobelco Eco-Solutions Co., Ltd, Kobe-shi, Hyogo 651-0072 (JP)
(72) Inventor: YAMASHITA, Tetsuo, Kobe-shi Hyogo 651-2241 (JP); AKASHI, Akira, Kobe-shi Hyogo 651-2241 (JP); HIROOKA, Takashi, Kobe-shi Hyogo 651-0086 (JP); YOSHIKAWA, Makoto, Kobe-shi Hyogo 651-0086 (JP); YAMAMOTO, Taira, Kobe-shi Hyogo 651-0086 (JP)
(74) Representative: Isarpatent
(86) International application number: PCT/JP2011/055959
(87) International publication number: WO 2011/118440

(57) **Abstract**

An object is to provide an anaerobic treatment apparatus that can maintain the activity of an anaerobe at a high level while reducing the amount of alkali agent used. Provided is an anaerobic treatment apparatus that has a tank containing an anaerobe and is configured to anaerobically treat an organic matter-containing wastewater with the anaerobe in the tank, including: a pH measurement unit for measuring the pH of water in the tank; and a CO₂ concentration measurement unit for measuring the CO₂ concentration of a gas in the tank, wherein the alkalinity of the water in the tank is calculated based on a measurement value obtained by the pH measurement unit, a measurement value obtained by the CO₂ concentration measurement unit and a relationship among the alkalinity of the water in the tank, the pH of the water in the tank and the CO₂ concentration of the gas in the tank, and an alkali agent is added to the water in the tank based on the calculated value so as to keep the alkalinity of the water in the tank within a range of 1000 to 5000 mg/L.

## Description

### FIELD OF THE INVENTION

The present invention relates to an anaerobic treatment apparatus and an anaerobic treatment method.

### RELATED ART

Conventional purification treatments for organic matter-containing wastewater (e.g., human wastewater, sewage water, industrial wastewater (wastewater discharged from, for example, a food factory, a chemical factory, a factory in electronics industry or a pulp plant) remove an organic matter from the wastewater by decomposing the organic matter into methane, carbon dioxide or the like through an anaerobic treatment of the organic matter in the wastewater in an anaerobic treatment tank that contains an anaerobe (a methanogen or an acid former, for example).

Such an anaerobe is highly active when the pH of the water in which the anaerobe exists is close to neutral, and therefore, it is necessary to keep the pH close to neutral in the anaerobic treatment. Typically, an organic acid (acetic acid, for example) is produced by acid formation in the course of the anaerobic treatment, and therefore the pH decreases. In the conventional anaerobic treatments, the pH is regularly measured, and when the pH becomes equal to or lower than a predetermined value, an alkali agent (caustic soda, for example) is added to the water in the tank to keep the pH close to neutral (see Non Patent Document 1, for example).

### Citation list

### Non Patent Literature

Non Patent Literature 1: Shinko Pantec Technical Report Vol.37, No.2, p.36-41 (in Japanese)

### SUMMARY OF THE INVENTION

### PROBLEMS TO BE SOLVED BY THE INVENTION

However, if a large amount of organic matter is rapidly fed into the water in the tank, the amount of acid produced per unit time accordingly increases, and the alkali agent in the water in the tank is consumed, which can result in an abrupt drop of the pH of the water in the tank before addition of the alkali agent to the water in the tank and thus a decrease of the activity of the anaerobe. To avoid this, an excessive amount of alkali agent can be added to the water in the tank in advance of an expected rapid feed of a large amount of organic matter into the water in the tank. However, this approach has a problem that it requires a large amount of alkali agent, and the running cost unwantedly increases.

There is a report that, in the anaerobic treatment, the activity of the anaerobe can be kept high if the alkali agent is added to the water in the tank in such a manner as to keep the alkalinity of the water in the tank within a range of 1000 to 5000 mg/L (M-alkalinity in terms of CaCO₃, the same holding true for the following description). Keeping the alkalinity of the water in the tank equal to or higher than 1000 mg/L in the anaerobic treatment helps to prevent an abrupt drop of the pH of the water in the tank because a predetermined amount or more of alkali agent exists in the water in the tank even when a large amount of organic matter is rapidly fed into the water in the tank. On the other hand, keeping the alkalinity of the water equal to or lower than 5000 mg/L in the anaerobic treatment helps to eliminate the need for an unwantedly large amount of alkali agent.

At present, it is common practice to control addition of the alkali agent based on the pH value, as described above. Since the pH of the water in the tank can be continuously measured, the amount of alkali agent poured into the water in the tank can be controlled with a simple facility. However, from the viewpoint of the required alkalinity, there is still a possibility that the amount of alkali agent poured into the water in the tank is too large or too small.

The amount of alkali agent poured into the water in the tank can be brought closer to an appropriate value by controlling the facility based on the measurement of the alkalinity of the water in the tank. However, in the state of the art, the alkalinity of the water has to be measured by titration and cannot be continuously measured, so that it is difficult to determine the optimal amount of poured alkali agent based on direct measurement of the alkalinity of the water in the tank. In addition, if the alkalinity of the water in the tank is measured by titration, and the amount of alkali agent added to the water in the tank is determined based on the measurement, the measurement takes time, so that the activity of the anaerobe can drop if the alkali agent fails to be quickly added to the water in the tank when the alkalinity of the water in the tank decreases below a predetermined value, or an unwantedly large amount of alkali agent can be used if an excessive amount of alkali agent is added to the water in the tank when the alkalinity of the water in the tank rises beyond a predetermined value. In addition, it is cumbersome and practically difficult to frequently take a sample of the water in the tank and measure the alkalinity of the water by titration.

The present invention has been made in view of the problems described above, and an object of the present invention is to provide an anaerobic treatment apparatus and an anaerobic treatment method that can maintain the activity of an anaerobe at a high level while reducing the amount of alkali agent used.

### MEANS FOR SOLVING PROBLEMS

As a result of earnest investigation, the present inventors have found that there is a relationship among the alkalinity of water in an anaerobic treatment tank, the pH of the water in the tank and the CO₂ concentration of a gas in the tank, and that, in the state of the art, the pH of water and the CO₂ concentration of gas can be more quickly measured than the alkalinity of water and eventually accomplished the present invention.

Specifically, according to the present invention, there is provided an anaerobic treatment apparatus that has a tank containing an anaerobe and is configured to anaerobically treat an organic matter-containing wastewater with the anaerobe in the tank, including: a pH measurement unit for measuring the pH of water in the tank; and a CO₂ concentration measurement unit for measuring the CO₂ concentration of a gas in the tank, wherein the alkalinity of the water in the tank is calculated based on a measurement value obtained by the pH measurement unit, a measurement value obtained by the CO₂ concentration measurement unit and a relationship among the alkalinity of the water in the tank, the pH of the water in the tank and the CO₂ concentration of the gas in the tank, and an alkali agent is added to the water in the tank based on the calculated value so as to keep the alkalinity of the water in the tank within a range of 1000 to 5000 mg/L.

In addition, according to the present invention, there is provided an anaerobic treatment method of anaerobically treating an organic matter-containing wastewater with an anaerobe in a tank, wherein a pH measurement unit for measuring the pH of water measures the pH of water in the tank, a CO₂ concentration measurement unit for measuring the CO₂ concentration of a gas measures the CO₂ concentration of a gas in the tank, the alkalinity of the water in the tank is calculated based on a measurement value of the pH, a measurement value of the CO₂ concentration and a relationship among the alkalinity of the water in the tank, the pH of the water in the tank and the CO₂ concentration of the gas in the tank, and an alkali agent is added to the water in the tank based on the calculated value so as to keep the alkalinity of the water in the tank within a range of 1000 to 5000 mg/L.

In the anaerobic treatment apparatus and the anaerobic treatment method, since the pH measurement unit for measuring the pH of water measures the pH of water in the tank, the CO₂ concentration measurement unit for measuring the CO₂ concentration of a gas measures the CO₂ concentration of a gas in the tank, and the alkalinity of the water in the tank is calculated based on the measurement value of the pH, the measurement value of the CO₂ concentration and a relationship among the alkalinity of the water in the tank, the pH of the water in the tank and the CO₂ concentration of the gas in the tank, the alkalinity of the water in the tank can be quickly figured out. In addition, since the alkali agent is added to the water in the tank based on the calculated alkalinity so as to keep the alkalinity of the water in the tank within a range of 1000 to 5000 mg/L, the alkalinity of the water in the tank can be accurately adjusted. Therefore, the activity of the anaerobe can be maintained at a high level while reducing the amount of alkali agent used.

### ADVANTAGES OF THE INVENTION

According to the present invention, the activity of an anaerobe can be maintained at a high level while reducing the amount of alkali agent used.

### BRIEF DESCRIPTION OF THE DRAWINGS

FIG. 1 is a schematic block diagram showing an anaerobic treatment apparatus according to an embodiment of the present invention.
FIG. 2 is a graph showing relationships among the alkalinity of water in a tank, the pH of the water in the tank, and the CO₂ concentration of a gas in the tank (Reference Document: McCarty P. L. (1964), "Anaerobic Waste Treatment Fundamentals/Part2/Environmental Requirements and Control", Public Works, October 1964, p.123).
FIG. 3 is a graph showing relationships among measurements of the alkalinity of water in a tank, the pH of the water in the tank, and the CO₂ concentration of a gas in the tank obtained in a test example, and relationships among literature values of the same.

### DETAILED DESCRIPTION OF THE PREFERRED EMBODIMENT

In the following, an embodiment of the present invention will be described with reference to the accompanying drawings.

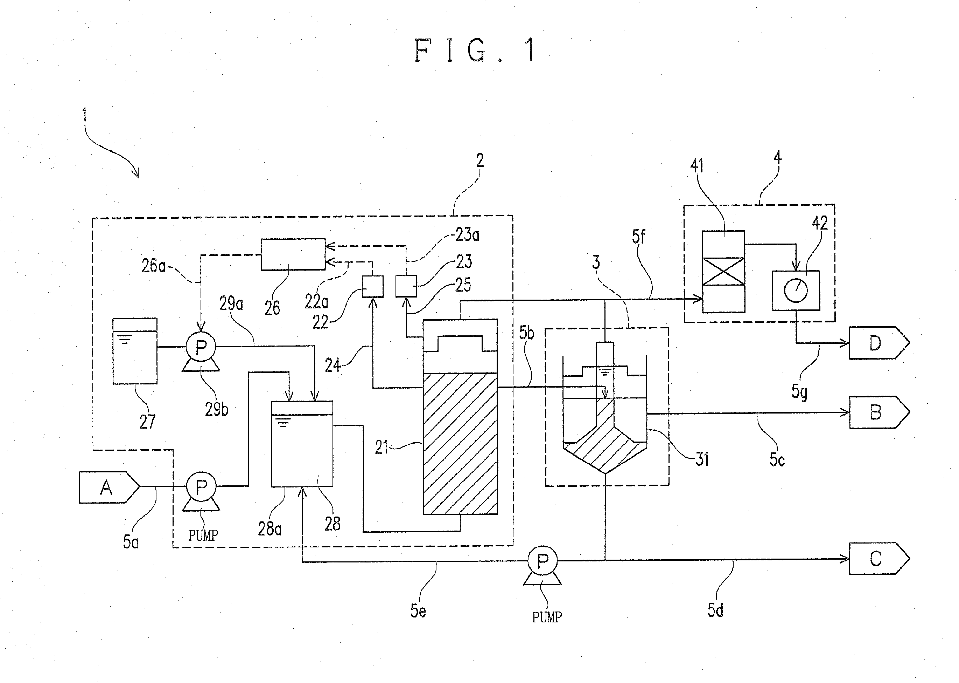

An anaerobic treatment apparatus according to this embodiment will be first described.
As shown in FIG. 1, an anaerobic treatment apparatus 1 according to this embodiment has an anaerobic treatment section 2 having an anaerobic treatment tank 21 that contains sludge water containing sludge containing an anaerobe.
The anaerobic treatment section 2 is configured to mix an organic matter-containing wastewater A and sludge in the anaerobic treatment tank 21 and anaerobically treat the wastewater A with the anaerobe to produce an anaerobically treated water and a biogas.
The anaerobe may be a methanogen or an acid former, for example.
The "anaerobic treatment" means a treatment that decomposes the organic matter contained in the wastewater A in an anaerobic state with the anaerobe, and the biogas produced in the anaerobic treatment is a gas containing methane, CO₂ or the like.

The anaerobic treatment apparatus 1 according to this embodiment further has a solid-liquid separating section 3 that separates the anaerobically treated water into a solid-liquid separation treated water B having a lower sludge content than the anaerobically treated water and a concentrated water C having a higher sludge content than the anaerobically treated water.

The anaerobic treatment apparatus 1 according to this embodiment further has a fuel gas producing section 4 that refines the biogas to produce a fuel gas D having a higher methane gas content than the biogas.

The anaerobic treatment apparatus 1 according to this embodiment is configured so that the wastewater A is fed to the anaerobic treatment section 2, the anaerobically treated water is fed to the solid-liquid separating section 3, the solid-liquid separation treated water B is fed to a solid-liquid separation treated water reservoir (not shown), the concentrated water C is fed to a concentrated water reservoir (not shown) and the anaerobic treatment section 2, the biogas is fed to the fuel gas producing section 4, and the fuel gas D is fed to a fuel gas reservoir (not shown).

The anaerobic treatment apparatus 1 according to this embodiment further has a wastewater feed conduit 5a for feeding the wastewater A to the anaerobic treatment section 2, an anaerobically treated water feed conduit 5b for feeding the anaerobically treated water to the solid-liquid separating section 3, a solid-liquid separation treated water feed conduit 5c for feeding the solid-liquid separation treated water B to the solid-liquid separation treated water reservoir (not shown), a concentrated water feed conduit 5d for feeding the concentrated water C to the concentrated water reservoir (not shown), a concentrated water return conduit 5e for feeding (returning) the concentrated water C to the anaerobic treatment section 2, a biogas feed conduit 5f for feeding the biogas to the fuel gas producing section 4, and a fuel gas feed conduit 5g for feeding the fuel gas D to the fuel gas reservoir (not shown).

The wastewater A is not particularly limited and can be any wastewater containing an organic matter that can be biologically decomposed by the anaerobe, such as human wastewater, sewage water, and industrial wastewater (wastewater discharged from, for example, a food factory, a chemical factory, a factory in electronics industry or a pulp plant). The BOD concentration of the wastewater A is 10 to 10000 mg/L, for example, and more specifically, 200 to 2000 mg/L. The CODcr concentration of the wastewater A is 2000 to 40000 mg/L, and more specifically, 5000 to 20000 mg/L.

The anaerobic treatment section 2 has a pH measurement unit 22 that measures the pH of water in the anaerobic treatment tank 21 and a CO₂ concentration measurement unit 23 that measures the CO₂ concentration of a gas in the anaerobic treatment tank 21.

The pH measurement unit 22 may be a glass electrode pH meter that measures pH based on the difference in potential between electrodes according to the glass electrode method, for example. The glass electrode pH meter can measure pH of water by simply immersing the electrodes in the water and therefore can more quickly measure the pH than the measurement of alkalinity in the titration test.

The CO₂ concentration measurement unit 23 may be an infrared CO₂ concentration meter relying on the infrared spectrum absorption analysis method, for example. CO₂ has a property of absorbing light having a specific wavelength (4.3 µm) of infrared rays. Using this property, the infrared CO₂ concentration meter illuminates a gas to be measured with the light having the specific wavelength and determines the CO₂ concentration from the amount of absorbed light and therefore can more quickly measure the CO₂ concentration than the measurement of alkalinity in the titration test. As an alternative, the CO₂ concentration measurement unit 23 may be a gaseous thermal conductivity-based unit.

The anaerobic treatment section 2 is configured so that the water in the anaerobic treatment tank 21 is fed as a measurement sample water to the pH measurement unit 22, and the gas in the anaerobic treatment tank 21 is fed as a measurement sample gas to the CO₂ concentration measurement unit 23.

The anaerobic treatment section 2 further has a measurement sample water feed conduit 24 for feeding the measurement sample water to the pH measurement unit 22 and a measurement sample gas feed conduit 25 for feeding the measurement sample gas to the CO₂ concentration measurement unit 23.

The anaerobic treatment section 2 is configured to calculate alkalinity based on the measurement value obtained by the pH measurement unit 22, the measurement value obtained by the CO₂ concentration measurement unit 23 and relationships among the alkalinity of the water in the anaerobic treatment tank 21, the pH of the water in the anaerobic treatment tank 21 and the CO₂ concentration of the gas in the anaerobic treatment tank 21, and add the alkali agent to the water in the anaerobic treatment tank 21 based on the calculated value so as to keep the alkalinity of the water in the anaerobic treatment tank 21 within a range of 1000 to 5000 mg/L.
The anaerobic treatment section 2 is further configured to add the alkali agent to the water in the anaerobic treatment tank 21 so as to keep the alkalinity of the water in the anaerobic treatment tank 21 within a range of 1000 to 5000 mg/L, preferably within a range of 1000 to 3000 mg/L, or more preferably within a range of 1000 to 1500 mg/L.
The alkali agent may be a caustic soda solution, for example.

The anaerobic treatment section 2 further has a control section 26 that performs a control so as to calculate the alkalinity of the water in the anaerobic treatment tank 21 based on the measurement value obtained by the pH measurement unit 22, the measurement value obtained by the CO₂ concentration measurement unit 23 and relationships among the alkalinity of the water in the anaerobic treatment tank 21, the pH of the water in the anaerobic treatment tank 21 and the CO₂ concentration of the gas in the anaerobic treatment tank 21, and add the alkali agent to the water in the anaerobic treatment tank 21 based on the calculated value so as to keep the alkalinity of the water in the anaerobic treatment tank 21 within a range of 1000 to 5000 mg/L.

The anaerobic treatment section 2 is further configured so that a data signal indicating the measurement value obtained by the pH measurement unit 22 and a data signal indicating the measurement value obtained by the CO₂ concentration measurement unit 23 are transmitted to the control section 26.

The anaerobic treatment section 2 further has a first signal transmission mechanism 22a that transmits the data signal indicating the measurement value obtained by the pH measurement unit 22 to the control section 26, and a second signal transmission mechanism 23a that transmits the data signal indicating the measurement value obtained by the CO₂ concentration measurement unit 23 to the control section 26.

The anaerobic treatment section 2 further has an alkali agent reservoir 27 that stores the alkali agent and a mixed water producing section 28 that produces a mixed water by mixing the concentrated water C returned from the solid-liquid separating section 3 to the anaerobic treatment section 2, the wastewater A and the alkali agent in a tank.
The mixed water producing section 28 has a mixed water reservoir 28a that stores the mixed water.

The anaerobic treatment section 2 is further configured so that the alkali agent is fed from the alkali agent reservoir 27 to the mixed water reservoir 28a, the wastewater A is fed to the mixed water reservoir 28a, the concentrated water C returned to the anaerobic treatment section 2 is fed to the mixed water reservoir 28a, and the wastewater A, the alkali agent and the concentrated water C are fed to the anaerobic treatment tank 21 in the form of the mixed water.

The anaerobic treatment section 2 further has an alkali agent feed conduit 29a for feeding the alkali agent from the alkali agent reservoir 27 to the mixed water reservoir 28a, and an alkali agent pump 29b that serves as a motive power source for feeding the alkali agent through the alkali agent feed conduit 29a.

The anaerobic treatment section 2 is configured so that the amount of alkali agent fed to the mixed water producing section 28 can be changed by changing the number of revolutions or the operating time of the alkali agent pump 29b. That is, the anaerobic treatment section 2 is configured to be capable of changing the alkalinity of the water in the anaerobic treatment tank 21.

The anaerobic treatment section 2 is further configured so that a signal from the control section 26 is transmitted to the alkali agent pump 29b, and the alkalinity of the water in the anaerobic treatment tank 21 is kept within a range of 1000 to 5000 mg/L by changing the number of revolutions or the operating time of the alkali agent pump 29b.

The anaerobic treatment section 2 further has a third signal transmission mechanism 26a that transmits the signal from the control section 26 to the alkali agent pump 29b.

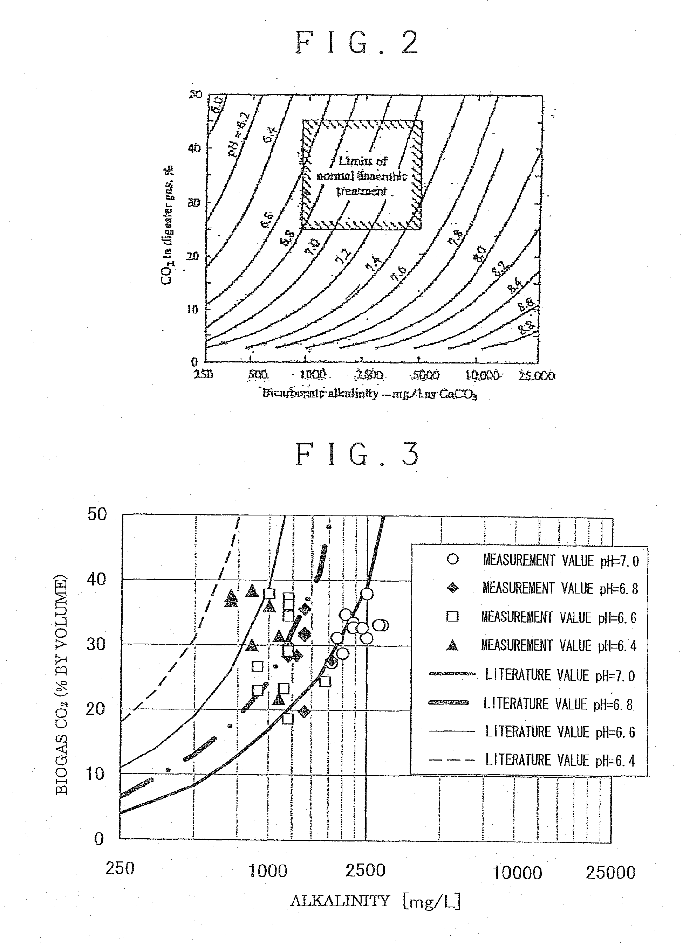

The relationships described above are described in McCarty P. L. (1964), "Anaerobic Waste Treatment Fundamentals/Part2/Environmental Requirements and Control", Public Works, October 1964, p.123. FIG. 2 shows the relationships disclosed in the document.
In FIG. 2, the vertical axis indicates the CO₂ concentration of the gas in the tank (percent by mass), the vertical axis indicates the alkalinity of the water in the tank (mg/L), and "pH" means the pH of the water in the tank.

The anaerobic treatment apparatus 1 according to this embodiment is configured to determine the calculated value described above by using the relationships described in the document cited above (McCarty P. L. (1964)) (the relationships shown in FIG. 2).
More preferably, the anaerobic treatment apparatus 1 according to this embodiment is configured to calculate the alkalinity of the water in the anaerobic treatment tank 21 by using relationships determined for the particular apparatus actually using wastewater, instead of the relationships described in the document. If the anaerobic treatment apparatus uses the relationships determined for the particular apparatus, the anaerobic treatment apparatus can more accurately calculate the alkalinity of the water in the anaerobic treatment tank 21 and therefore can advantageously maintain the activity of the anaerobe at a higher level while further reducing the amount of alkali agent used. A specific example of the relationships determined for the particular apparatus will be described later with regard to an example.

The solid-liquid separating section 3 has a gravity settling chamber 31 that separates the anaerobically treated water into the solid-liquid separation treated water B and the concentrated water C by gravity settling of sludge.

The fuel gas producing section 4 has a desulfurization tower 41 that removes sulfur from the biogas to produce the fuel gas D, and a gas meter 42 that measures the amount of fuel gas D produced by the desulfurization tower 41 per unit time.

The anaerobic treatment apparatus according to this embodiment is configured as described above. Next, an anaerobic treatment method according to this embodiment will be described.

According to the anaerobic treatment method of this embodiment, the wastewater A is anaerobically treated with the anaerobe in the anaerobic treatment tank 21.

According to the anaerobic treatment method of this embodiment, the pH measurement unit 22 measures the pH of the water in the anaerobic treatment tank 21, the CO₂ concentration measurement unit 23 measures the CO₂ concentration of the gas in the anaerobic treatment tank 21, the alkalinity of the water in the anaerobic treatment tank 21 is calculated based on the measurement value of the pH, the measurement value of the CO₂ concentration and the relationships described above, and the alkali agent is added to the water in the anaerobic treatment tank 21 based on the calculated value so as to keep the alkalinity of the water in the tank within a range of 1000 to 5000 mg/L.

Although the anaerobic treatment apparatus 1 and the anaerobic treatment method according to this embodiment have the configuration and advantages described above, the anaerobic treatment apparatus and the anaerobic treatment method according to the present invention are not limited to the configuration described above and can be modified in design as required.

### EXAMPLES

Next, the present invention will be further specifically described with regard to a test example.

Wastewater (artificially adjusted wastewater having a CODcr concentration of 10000 mg/L) was anaerobically treated with anaerobes (a methanogen and an acid former) in an anaerobic treatment tank (containing 5 L of water and 1 L of gas). A caustic soda solution (4 %) was added as required to the water in the anaerobic treatment tank for pH adjustment.
During the anaerobic treatment, the alkalinity of the water in the anaerobic treatment tank, the pH of the water in the anaerobic treatment tank, and the CO₂ concentration of the gas (biogas) in the anaerobic treatment tank (referred to also as "biogas CO₂") were measured.
FIG. 3 shows the result. FIG. 3 also shows values (literature values) cited from the document cited above (McCarty P. L. (1964)).
In FIG. 3, the unit "%" of the CO₂ concentration of the biogas means "percent by volume".

As shown in FIG. 3, as with the document cited above, this test showed that there are good relationships among the alkalinity of the water in the anaerobic treatment tank, the pH of the water in the anaerobic treatment tank, and the CO₂ concentration of the gas in the anaerobic treatment tank.
As described above, the alkalinity of the water in the anaerobic treatment tank 21 can be more accurately calculated by using the relationships calculated for the particular apparatus, which suggests that the activity of the anaerobe can be maintained at a higher level while further reducing the amount of alkali agent used.

### DESCRIPTION OF REFERENCE SIGNS

1: anaerobic treatment apparatus, 2: anaerobic treatment section, 3: solid-liquid separating section, 4: fuel gas producing section, 5a: wastewater feed conduit, 5b: anaerobically treated water feed conduit, 5c:solid-liquid separation treated water feed conduit, 5d: concentrated water feed conduit, 5e: concentrated water return conduit, 5f: biogas feed conduit, 5g: fuel gas feed conduit, 21: anaerobic treatment tank, 22: pH measurement unit, 22a: first signal transmission mechanism, 23 : CO₂ concentration measurement unit, 23a: second signal transmission mechanism, 24: measurement sample water feed conduit, 25: measurement sample gas feed conduit, 26: control section, 26a: third signal transmission mechanism, 27: alkali agent reservoir, 28: mixed water producing section, 28a: mixed water reservoir, 29a: alkali agent feed conduit, 29b: alkali agent pump, 31: gravity settling chamber, 41: desulfurization tower, 42: gas meter, A: wastewater, B: solid-liquid separation treated water, C: concentrated water, D: fuel gas

## Claims

1. An anaerobic treatment apparatus that has a tank containing an anaerobe and is configured to anaerobically treat an organic matter-containing wastewater with the anaerobe in the tank, comprising:
a pH measurement unit for measuring the pH of water in the tank; and
a CO₂ concentration measurement unit for measuring the CO₂ concentration of a gas in the tank,
wherein the alkalinity of the water in the tank is calculated based on a measurement value obtained by the pH measurement unit, a measurement value obtained by the CO₂ concentration measurement unit and a relationship among the alkalinity of the water in the tank, the pH of the water in the tank and the CO₂ concentration of the gas in the tank, and an alkali agent is added to the water in the tank based on the calculated value so as to keep the alkalinity of the water in the tank within a range of 1000 to 5000 mg/L.

2. An anaerobic treatment method of anaerobically treating an organic matter-containing wastewater with an anaerobe in a tank,
wherein a pH measurement unit for measuring the pH of water measures the pH of water in the tank, a CO₂ concentration measurement unit for measuring the CO₂ concentration of a gas measures the CO₂ concentration of a gas in the tank, the alkalinity of the water in the tank is calculated based on a measurement value of the pH, a measurement value of the CO₂ concentration and a relationship among the alkalinity of the water in the tank, the pH of the water in the tank and the CO₂ concentration of the gas in the tank, and an alkali agent is added to the water in the tank based on the calculated value so as to keep the alkalinity of the water in the tank within a range of 1000 to 5000 mg/L.
